# EUROPEAN PATENT APPLICATION

(11) **EP 4 471 467 A1**
(43) Date of publication of application: **04.12.2024**
(21) Application number: 23905958.7
(22) Date of filing: 19.12.2023
(51) Int. Cl.: G02B 5/128, G02B 1/14, G09F 13/16

(54) **ANTI-COUNTERFEITING REFLECTIVE SHEET AND PREPARATION METHOD THEREFOR**

(30) Priority: 23.12.2022 CN 202211666414
(71) Applicant: Nippon Carbide Industries (Hangzhou) Co., Ltd., Hangzhou, Zhejiang 311231 (CN)
(72) Inventor: JIANG, Jihui, Hangzhou, Zhejiang 311231 (CN); HAN, Jianjun, Hangzhou, Zhejiang 311231 (CN); XIAO, Yuetang, Hangzhou, Zhejiang 311231 (CN); CHEN, Yan, Hangzhou, Zhejiang 311231 (CN)
(74) Representative: Horn Kleimann Waitzhofer Schmid-Dreyer Patent- und Rechtsanwälte PartG mbB
(86) International application number: PCT/CN2023/139930
(87) International publication number: WO 2024/131795

(57) **Abstract**

The present invention relates to an anti-counterfeit reflective sheet and a preparation method therefor. The anti-counterfeit reflective sheet of the present invention has a glass beads-enclosed structure, which comprises a specularly reflective layer, and part of metal is removed from the specularly reflective layer by electromagnetic radiation. The anti-counterfeit reflective sheet of the present invention can balance RFID signal transmission and retroreflective properties.

## Description

### TECHNICAL FIELD

The present invention relates to a reflective material, in particular to an anti-counterfeit reflective sheet and a preparation method therefor.

### BACKGROUND

At present, in order to further reinforce the management of personal and express delivery or take-out delivery electric bicycles, license plates are gradually changing from ordinary chipless license plates to license plates with chips.

Radio frequency identification technology, also referred to as RFID technology, uses wireless radio frequency to carry out non-contact two-way data communication and uses wireless radio frequency to read and write recording media (electronic tags or radio frequency cards), so as to achieve the purpose of identifying goals and data exchange. The radio frequency-responsive element can include electronic information for identifying the target. RFID tags or chips are now typically adhered to vehicle windshields for registration of electronic vehicles or the like, as described in Patent Literature 1. Considering the fact that metal will cause signal interference to RFID chips, it is common to package RFID chips in plastic parts nowadays. As the substrates of number plates are mainly plastic, it is theoretically possible to package the RFID chip in this plastic, and then inkjet printing the number plate characters and two-dimensional code and the like on the plastic. However, since this sort of number plates does not have retroreflective properties, the visibility of the number plates is relatively poor when driving at night. In case of any illegal acts such as accidents, it will be difficult to recognize them when escaping at night. Patent Literature 2 discloses a combination tag suitable for use as a vehicle identification window sticker, including a retroreflective article having a specularly reflective layer, and a radio frequency-responsive element. However, Patent Literature 2 articulates in the specification that the radio frequency-responsive element is spaced apart from the retroreflective article a sufficient distance so as not to substantially effect the performance of the radio frequency-responsive element.

Therefore, how to design and manufacture an anti-counterfeit reflective sheet capable of balancing RFID signal transmission and retroreflective properties by a simple, convenient and controllable preparation method remains to be further studied and developed.

### Cited Literatures:

Patent Literature 1: CN101297307A
Patent Literature 2: CN100409255C

### SUMMARY

### Technical Problem

In order to solve the above technical problem in the prior art, an objective of the present invention is to provide an anti-counterfeit reflective sheet that can balance RFID signal transmission and retroreflective properties.

Another objective of the present invention is to provide a preparation method for anti-counterfeit reflective sheets, which is simple, convenient and controllable and results in anti-counterfeit reflective sheets that are RFID signal transmissible.

### Solution to Problem

After long-term studies, the inventors have found that the above technical problem can be solved by implementing the following technical solutions:
[1] An anti-counterfeit reflective sheet, wherein
   the anti-counterfeit reflective sheet has a glass beads-enclosed structure, which comprises a specularly reflective layer, and part of metal is removed from the specularly reflective layer by electromagnetic radiation.
[2] The anti-counterfeit reflective sheet according to [1], wherein
   a ratio of the area of a metal-removed portion to the area of the specularly reflective layer is from 1% to 60%.
[3] The anti-counterfeit reflective sheet according to [1] or [2], wherein
   the specularly reflective layer is formed of a metal, and preferably, the metal is one or more selected from aluminum, silver, chromium, nickel, magnesium, gold, and tin.
[4] The anti-counterfeit reflective sheet according to any one of the technical solutions of [1] to [3], wherein
   the anti-counterfeit reflective sheet further comprises an injection moldable structure.
[5] The anti-counterfeit reflective sheet according to [4], wherein
   the injection moldable structure comprises a bonding layer and an injection-molding bonding layer, and further, the anti-counterfeit reflective sheet comprises a surface layer, a support layer, glass beads, a focusing layer, the specularly reflective layer, the bonding layer, and the injection-molding bonding layer in this order.
[6] The anti-counterfeit reflective sheet according to [5], wherein
   the injection-molding bonding layer comprises one or more of a polycarbonate film, a polyacrylate film and/or a polyethylene terephthalate film.
[7] The anti-counterfeit reflective sheet according to [4], wherein
   the injection moldable structure is selected from injection moldable bonding resin layers, and further, the anti-counterfeit reflective sheet comprises a surface layer, a support layer, glass beads, a focusing layer, the specularly reflective layer, and the injection moldable bonding resin layer in this order.
[8] The anti-counterfeit reflective sheet according to [7], wherein
   a resin of the injection moldable bonding resin layer at least comprises at least one of a vinyl chloride-vinyl acetate copolymer, a vinyl chloride polymer and/or an ethylene-vinyl acetate copolymer.
[9] The anti-counterfeit reflective sheet according to any one of the technical solutions of [1] to [8], wherein
   when a viewing angle is 0.2° and an incident angle is 5°, the anti-counterfeit reflective sheet has a coefficient of retroreflection of 45 or more for white color, and a coefficient of retroreflection of 30 or more for yellow color.
[10] The anti-counterfeit reflective sheet according to any one of the technical solutions of [1] to [9], wherein
   the anti-counterfeit reflective sheet has RFID signal sensitivity of -17 dBm or less and a frequency of between 920 Hz and 925 Hz.
[11] A method for preparing the anti-counterfeit reflective sheet according to any one of the technical solutions of [1] to [10], wherein
   the preparation method comprises the steps of:
   1) preparing a surface layer and a support layer on an engineering substrate respectively, attaching glass beads to the support layer, forming a focusing layer by coating a resin mixture, and vacuum depositing or sputtering a metal on the focusing layer to obtain a specularly reflective layer;
   2) forming a pattern on the specularly reflective layer by electromagnetic radiation; and
   3) peeling off the engineering substrate to obtain the anti-counterfeit reflective sheet.
[12] The preparing method for the anti-counterfeit reflective sheet according to [11], wherein
   the preparation method further optionally comprises a step of bonding the structure obtained in step 1) to an injection moldable structure after step 1).
[13] The preparing method for the anti-counterfeit reflective sheet according to [11], wherein
   the preparation method further optionally comprises a step of bonding the structure obtained in step 2) to an injection moldable structure after step 2).
[14] An injection-molded sheet containing an RFID chip, wherein the injection-molded sheet comprises the anti-counterfeit reflective sheet according to any one of the technical solutions of [1] to [10] or an anti-counterfeit reflective sheet obtained by the preparation method according to any one of the technical solutions of [11] to [13].

### Advantageous Effects of the Invention

The present invention adopts electromagnetic radiation to remove part of metal from the specularly reflective layer, which could environmentally friendly and conveniently remove the metal with a high metal removal rate, and could give an anti-counterfeit reflective sheet that balances RFID signal transmissibility and retroreflective properties and has high RFID signal sensitivity and maintenance rate of the coefficient of retroreflection. In some preferred embodiments of the present invention, all the retroreflective properties of the anti-counterfeit reflective sheets of the present invention meet the standard of Retro-Reflective Sheetings for License Plates of Motor Vehicles (GA666 2018) or the ISO7591 standard, and have the RFID signal sensitivity of -17 dBm or less and the frequency of between 920 Hz and 925 Hz. In some preferred embodiments of the present invention, the anti-counterfeit reflective sheets of the present invention could be easily injection molded, and will not have the problems such as wrinkles or cracks after injection molding. In some preferred embodiments of the present invention, the injection-molded sheets containing an RFID chip provided in the present invention are difficult to be uncovered or peeled off, and number plate characters or two-dimensional codes may be inkjet printed on the anti-counterfeiting reflective sheets.

### BRIEF DESCRIPTION OF THE DRAWINGS

FIG. 1: a cross-sectional schematic diagram for an anti-counterfeit reflective sheet according to one example of the present invention.
FIG. 2: a cross-sectional schematic diagram for an anti-counterfeit reflective sheet according to another example of the present invention.
FIG. 3: a cross-sectional schematic diagram for an anti-counterfeit reflective sheet according to another example of the present invention.
FIG. 4: a schematic diagram for a pattern of connected hexagons according to one example of the present invention.
FIG. 5: a schematic dot diagram according to another example of the present invention.
FIG. 6: a schematic diagram for a pattern of unconnected hexagons according to another example of the present invention.
FIG. 7: a schematic diagram for patterns corresponding to different removal areas according to another example of the present invention.

1. surface layer; 2. support layer; 3. glass beads; 4. focusing layer; 5. reflective layer; 6. bonding layer; 7. injection-molding bonding layer; 8. injection moldable bonding resin layer; 5-1. removal layer of specularly reflective layer; 10. metal-removed portion; 20. metal-unremoved portion.

### DETAILED DESCRIPTION

The embodiments of the present invention will be described below, but the present invention is not limited thereto. The present invention is not limited to the configurations described below. Various variations can be made within the scope claimed in the invention, and embodiments and examples derived by appropriately combining the technical means disclosed respectively in different embodiments and examples are also encompassed in the technical scope of the present invention. In addition, all the literatures disclosed in the present specification are incorporated herein as references.

Unless otherwise defined, the technical and scientific terms used in the present specification have the same meanings as typically understood by one of ordinary skill in the art to which the present disclosure belongs.

In the context of the descriptions of the present specification (particularly in the context of the appended claims), the terms "a", "an", and "this (the)" and similar languages will be construed to cover the singular and plural, unless otherwise indicated herein or manifestly contradicted to the context.

The numerical range represented by "numerical value A to numerical value B" or "numerical value A - numerical value B" used in the present specification refers to the range including the endpoint values A and B.

In the present specification, the term "may" involves both the meaning of doing something and the meaning of not doing something. In the present specification, the term "optional" or "optionally" means that the event or situation described subsequently may or may not occur, and the description includes the situation where the event occurs and the situation where the event does not occur.

Phrases such as "some specific/preferred embodiments", "other specific/preferred embodiments", "some specific/preferred technical solutions", and "other specific/preferred technical solutions" mentioned in the present specification mean that particular elements (for example, features, structures, properties and/or characteristics) described in relation to this embodiment are included in at least one of the embodiments described herein, and may or may not exist in other embodiments. Additionally, it should be appreciated that the elements may be combined in any suitable manner into various embodiments.

The term "comprising" and any variations thereof in the specification and claims of the present invention are intended to cover non-exclusive inclusion. For example, a process, method or system, product or device including a series of steps or units is not limited to the listed steps or units, but optionally further comprises unlisted steps or units, or optionally further comprises other steps or units inherent to such processes, methods, products or devices.

### <Anti-Counterfeit Reflective Sheet>

The present invention provides an anti-counterfeit reflective sheet having a glass beads-enclosed structure, which comprises a specularly reflective layer, and part of metal is removed from the specularly reflective layer by electromagnetic radiation.

Retroreflection describes the mechanism that light incident on a surface is reflected so that a large number of incident beams are directed towards the source where they are emitted. There are basically four categories of retroreflective films or reflective films: glass beads-enclosed reflective films, glass bead capsule reflective films, prism capsule reflective films, and prism evaporated reflective films. The present inventors have found through research and development that the retroreflective structures of the two categories of prism-type reflective films are formed by molding plastic sheets (PC, PMMA) or the like with nano-scale molds, and such retroreflective structures are easily damaged at high temperatures and high pressures of injection molding and thus do not have the retroreflective properties. The glass bead capsule type is partially hollow because of its capsule structure, and the hollow portion is damaged at high temperatures and high pressures, which will cause the retroreflective properties to be declined to 80% or less, while the hollow portion will be pressed unevenly, leading to wrinkles, concave and convex and other defects. As such, the anti-counterfeit reflective sheets of the present invention are chosen to have a glass beads-enclosed structure. Such kind of reflective sheets do not have a capsule structure and the glass beads are embedded in the resin. The retroreflective structure will not be damaged under the injection molding conditions of the present invention. However, due to the need of process structure, this type of reflective sheets usually has a specularly reflective layer made of metal. The thickness of the specularly reflective layer of a normal reflective film is typically controlled to be 1200 Å or more. If too thin, it is likely that the specularly reflective layer has poor retroreflective properties and poor weather resistance, and cannot meet the weather resistance requirements. The present inventors have found through experiments that even in case of a thickness as thin as 100 Å, it still has a strong shielding effect on RFID signals. In addition, the general structure of the glass beads-enclosed reflective film or reflective sheet is a surface layer, a support layer, glass beads, a focusing layer, a specularly reflective layer, an adhesive layer and a release layer of protective adhesive. From the surface layer to the specularly reflective layer is the main characteristic, especially the specularly reflective layer. During injection molding, the reflective film or reflective sheet is attached to the mold wall of the injection mold, where the surface layer is electrostatically adhered to the mold wall and the adhesive layer is close to the injection molding side. Because of the stickiness of the adhesive, it is easy to stick hands and is inconvenient to operate. Therefore, the present inventors have conducted extensive studies on how to design a reflective sheet based on the glass beads-enclosed structure, such that it can not only ensure the retroreflective properties after injection molding but also realize the RFID signal transmission.

The specularly reflective layer is a layer that reflects light, and is composed of a metal in the present invention. In some specific embodiments of the present invention, the specularly reflective layer may be formed of one or more metals of aluminum, silver, chromium, nickel, magnesium, gold, tin and the like by a vacuum deposition method, a sputtering method, etc. In some specific embodiments of the present invention, aluminum is preferred in consideration of the factors such as cost. If a metal film reflecting the shape of the focus-forming layer is to be formed uniformly, the deposition method is desirable. In some specific embodiments of the present invention, the initial thickness of the metal of the specularly reflective layer may be 100 Å or more, and preferably 500 Å or more from the standpoints of the requirement for the weather resistance of the retroreflective sheet and the hue control of white color. In view of the influence of metal on RFID signals, in order to solve the problem of signal transmissibility, the present invention adopts a method of removing part of metal from the specularly reflective layer by electromagnetic radiation. If the metal is fully removed, the coefficient of retroreflection will be reduced to within 20% of the specification of Retro-Reflective Sheetings for License Plates of Motor Vehicles (GA666 2018), which does not meet the requirements of reflective film products. As to the removal methods for the reflective layer, the chemical corrosion method has the problems, such as no environmental protection, complex process, and high costs; in case of half-cut or full-cut punching, there will be holes on the surface, which are not conducive to inkjet printing; in case of the baffle method, i.e., a method of forming a partially metal-free layer through a baffle during deposition of aluminum, because it is difficult to control the wire diameter of the baffle to one millimeter or less and aluminum easily penetrates into the baffle in a vacuum state, the process is difficult to control and the shape is also difficult to change; the electromagnetic radiation method used in the present invention is relatively easier to control and implement, and is more environmentally friendly and lower in cost. In a possible implementation, the electromagnetic radiation may be conducted by any one of optical fiber, carbon dioxide, infrared, end-pumped infrared, green light, and ultraviolet light, and furthermore the wavelength of light used for radiation is between 200 nm and 1200 nm. In some specific embodiments of the present invention, the electromagnetic radiation may be conducted in a laser engraving way by using a conventional laser machine such as Nd:YAG or F:YAG (optical fiber) to output and print a pattern designed by software such as vector software CDR, AI or CAD on a computer. In one specific embodiment of the present invention, the laser machine used for electromagnetic radiation has the operating power of 30 to 50 W, the effective vector step of 0.01 to 0.1 mm, furthermore 0.01 to 0.02 mm, and the delay between the effective vector steps of 20 to 80 µs. In another specific embodiment of the present invention, the Nd:YAG laser machine is used for electromagnetic radiation; the current is 20% or more of the total current; the electromagnetic radiation is optimal at the focus and may be within 200 mm from the focus. In other specific embodiments of the present invention, the radio wave radiation may be processed monolithically or roll-to-roll. More specifically, the processing equipment may be a rewinding machine with the unwinding and rewinding functions. There is a platform in the middle of the unwinding unit, and the electromagnetic radiation radiator is erected on the platform. After the unwinding switch is started, the electromagnetic radiation starts to work. The reflective material is subjected to the radio wave radiation according to the shape of the pattern and the preset radiation conditions, and the speed is preferably controlled within 5 m/min. The present invention does not particularly limit the shape of the metal-removed portion, which may be trigonal, quadrilateral, pentagonal, hexagonal, etc., or may be in an additional shape, such as dot, circle or trapezoid. In some specific embodiments of the present invention, if the pattern is a line structure, the line thickness is preferably 0.2 mm or more, and further 0.4 mm or more and 1 mm or less. In some specific embodiments of the present invention, to achieve a better balance between RFID signal transmissibility and retroreflective properties, the ratio of the area of the metal-removed portion to the area of the specularly reflective layer is 1% to 60%, and further the area ratio is 5% to 50%, furthermore 6% to 40%, more preferably 15% to 30%. The metal-removed portion may have no metal residues at all or may have some metal residues. In some specific embodiments of the present invention, the metal-removed portion may have metal residues of 1 to 20 Å in thick.

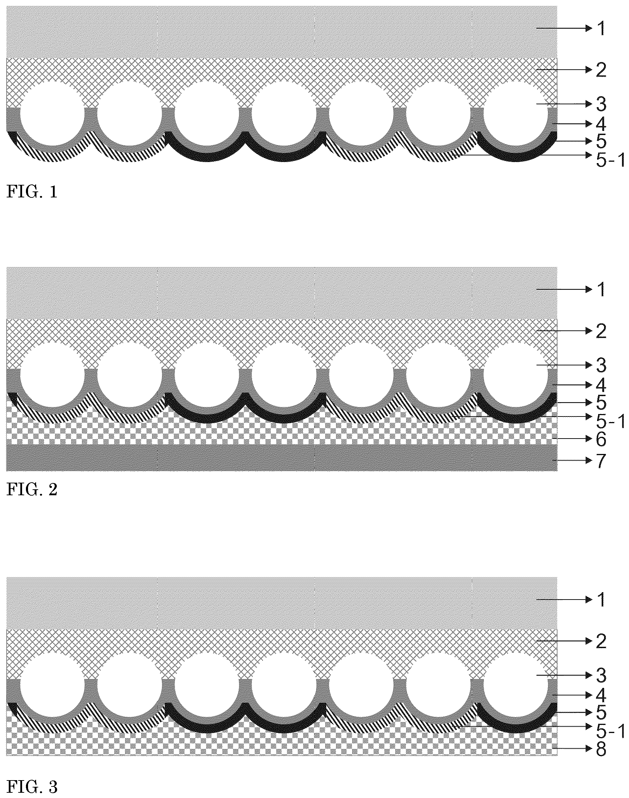

FIG. 1 shows a cross-sectional schematic diagram for an anti-counterfeit reflective sheet according to one example of the present invention. As shown in FIG. 1, this anti-counterfeit reflective sheet may include, from top to bottom, a surface layer 1, a support layer 2, glass beads 3, a focusing layer 4, and a specularly reflective layer 5 that are connected in sequence. The specularly reflective layer 5 has a portion from which the metal is removed by electromagnetic radiation, i.e., a removal layer 5-1 of the specularly reflective layer.

In some preferred embodiments of the present invention, for better injection molding subsequently, the present invention provides an injection moldable structure in the anti-counterfeit reflective sheet. In the present invention, the "injection moldable structure" may also be referred to as a "thermoformable structure", which specifically means that this structure includes a thermoformable material capable of being bonded to the injected injection moldable material on the mold wall of the injection molding equipment. More specifically, this material will soften moderately under the injection molding conditions and can be bonded to the injection moldable material. In the present invention, the "thermoformable material" means any suitable material or combination of materials that are thermoformable, i.e. capable of being formed by heating and/or compression. Preferably, the thermoformable material does not change into a molten form when heated. The "injection moldable material" means any suitable material or combination of materials that can be injection molded to form the selected shape. The injection moldable material can be changed into a molten form when heated, and the examples include, but are not limited to, one or more of thermoplastic polymer materials such as polypropylene, polyethylene, acetal or composite polymer, polycarbonate, etc. In some specific embodiments of the present invention, the injection moldable structure may include a bonding layer and an injection-molding bonding layer. The bonding layer functions primarily as an adhesive. The type of the resin forming the bonding layer is not particularly limited, and may be a resin commonly used as an adhesive. The resin as an adhesive may be an acrylic resin, a silicone resin, and a phenol resin, etc. Among them, the acrylic resin or silicone resin with excellent weather resistance and good adhesiveness is more suitable for use. The injection-molding bonding layer is mainly composed of a thermoformable material. In consideration of the softening temperature, the injection-molding bonding layer comprises one or more of a polycarbonate film, a polyacrylate film and/or a polyethylene terephthalate film in some specific embodiments of the present invention. In some specific embodiments of the present invention, the injection moldable structure may be obtained by coating the bonding layer resin on the injection-molding bonding layer and drying it. In some specific embodiments of the present invention, the thickness of the injection moldable structure is 5 to 80 µm and furthermore 20 to 50 µm. In other specific embodiments of the present invention, the injection moldable structure may consist only of an injection moldable bonding resin layer. The injection moldable bonding resin layer has both thermoformable properties and adhesiveness. In some preferred embodiments of the present invention, the resin of the injection moldable bonding resin layer at least comprises at least one of a vinyl chloride-vinyl acetate copolymer, a vinyl chloride polymer and/or an ethylene-vinyl acetate copolymer. Preferably, the resin of the injection moldable bonding resin layer at least comprises a vinyl chloride-vinyl acetate copolymer (PWA), also referred to as chlorine vinegar resin, which is dominated by vinyl chloride chain segments and prepared mainly by copolymerizing vinyl chloride (VC) with vinyl acetate (VAc). It is commercially available with excellent properties such as internal plasticization and a low melting temperature. In one specific embodiment of the present invention, the vinyl chloride-vinyl acetate copolymer has a weight-average molecular weight of 20,000 to 70,000, a gelation rate (80% ethyl acetate as a solvent) of 2% to 7%, and a glass transition temperature of 42°C to 50°C. In some specific embodiments of the present invention, the thickness of such an injection moldable structure is 5 to 80 µm, and furthermore 20 to 40 µm.

FIG. 2 shows a cross-sectional schematic diagram for an anti-counterfeit reflective sheet according to another example of the present invention. As shown in FIG. 2, this anti-counterfeit reflective sheet may include, from top to bottom, a surface layer 1, a support layer 2, glass beads 3, a focusing layer 4, a specularly reflective layer 5, a bonding layer 6 and an injection-molding bonding layer 7 that are connected in sequence. The bonding layer 6 and the injection-molding bonding layer 7 are combined into the injection moldable structure of the present invention. Referring to FIG. 2, it is clear that the specularly reflective layer 5 has a portion from which the metal is removed by electromagnetic radiation, i.e., a removal layer 5-1 of the specularly reflective layer.

FIG. 3 shows a cross-sectional schematic diagram for an anti-counterfeit reflective sheet according to another example of the present invention. As shown in FIG. 3, this anti-counterfeit reflective sheet may include, from top to bottom, a surface layer 1, a support layer 2, glass beads 3, a focusing layer 4, a specularly reflective layer 5, and an injection moldable bonding resin layer 8 that are connected in sequence. The injection moldable bonding resin layer 8 is the injection moldable structure of the present invention. Referring to FIG. 3, it is clear that the specularly reflective layer 5 has a portion from which the metal is removed by electromagnetic radiation, i.e., a removal layer 5-1 of the specularly reflective layer.

The surface layer 1 (also referred to as the surface protective layer) of the present invention is mainly used to protect the reflective layer body and improve its weather resistance. The surface layer 1 may be composed of a flat film-like resin with light-transmitting properties, for exmaple, a film-like resin having a total light transmittance of 80% or more. In some specific embodiments of the present invention, the resin constituting the surface layer 1 includes at least one of acrylic resin, alkyd resin, fluororesin, vinyl chloride resin, polyester, polyurethane resin, and polycarbonate. From the standpoints of weather resistance and processability, acrylic resin, polyester and vinyl chloride resin are more suitable. If factors such as fitness during painting or dispersion of colorant during coloring are considered, acrylic resin is more suitable than other resins. In addition, in order to improve other properties of the surface layer 1, additives such as an ultraviolet absorber, a stabilizer, a plasticizer, a bridging agent, and a colorant may also be added to the resin if necessary. The bridging agent may be at least one selected from the group consisting of an isocyanate bridging agent, an epoxy resin bridging agent, a melamine bridging agent, and a metal chelate bridging agent. Since the products of the present invention are mainly used to prepare license plates, the surface protective layer is preferably not colored but is colorless and transparent.

The supporting layer 2 is laminated below the surface layer 1 and used to secure the glass beads 3. The glass beads 3 are partially embedded in the support layer 2 and partially embedded in the focusing layer 4. In some specific embodiments of the present invention, the support layer 2 may be composed of a film-like resin having light-transmitting properties. The support layer 2 is made of at least one of acrylic resin, alkyd resin, fluororesin, polyvinyl chloride resin, polyester fiber, polyurethane resin or polycarbonate, further preferably at least one of acrylic resin, polyester fiber or polyvinyl chloride resin, and preferably acrylic resin in consideration of factors such as the coating adaptability and the glass bead retention. In some specific embodiments of the present invention, the thickness of the support layer is 10 µm to 30 µm. In addition to the resin, ultraviolet absorbers, stabilizers, antioxidants or plasticizers may also be added to the support layer. Preferably, the support layer 2 is not colored.

The diameter of the glass beads 3 in the support layer 2 is 40 pm to 80 pm. Glass beads having a diameter of 50 pm to 65 pm are preferred. When the particle diameter of the glass beads is 65 pm or less, an appropriate focal distance can be maintained. Additionally, the refractive index of the glass beads is 1.9 to 2.5. Glass beads having a refractive index of 2.0 to 2.3 are preferred. When the refractive index of the glass beads is 1.9 or more, an appropriate focal distance can be maintained; however, when the refractive index is 2.5 or less, the transparency of the glass beads is relatively good. In a possible implementation, 75% of the thickness of the glass beads 3 is in the support layer 2. If the densest filling rate is regarded as 100%, the filling rate of the glass beads 3 in the support layer 2 may be 60% or more. This is because the anti-counterfeiting effect can be more fully exerted by allowing the filling rate of the glass beads 3 in the support layer 2 to be 60% or more.

The focusing layer 4 is used to adjust the distance from the surface of the glass microspheres to the specular reflection. It is laminated below the support layer 2 to cover the portion of the glass bead protruded from the support layer 2, and is located on the side opposite to the support layer 2. The focusing layer 4 may also be composed of a film-like resin having light-transmitting properties. In other words, the resin constituting the surface layer 1 may also be used to constitute the focusing layer 4. In some specific embodiments of the present invention, the thickness of the focusing layer 4 is 15 to 35 pm.

A specularly reflective layer 5 is formed on the side surface of the focusing layer 4. In a possible implementation, it may be formed by vacuum depositing or sputtering a metal.

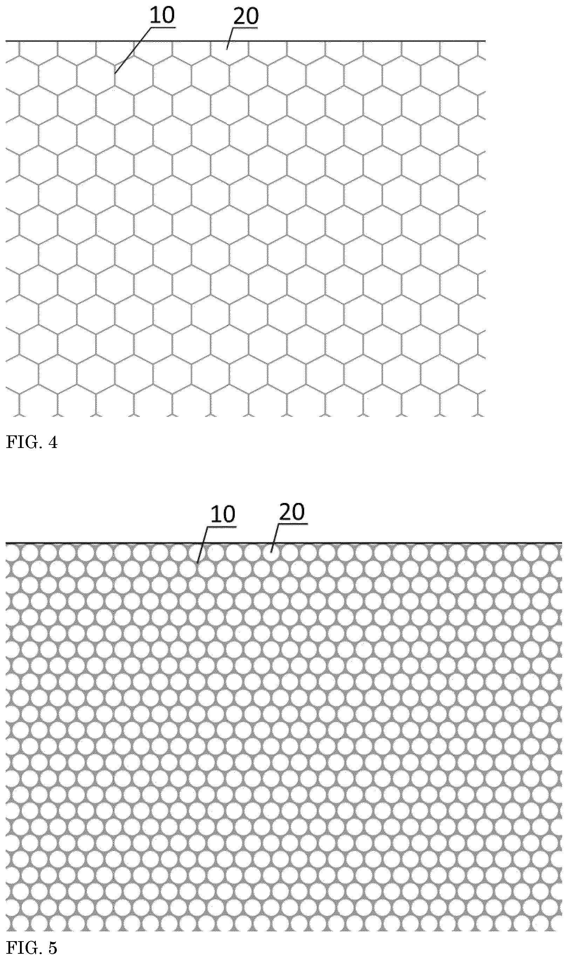

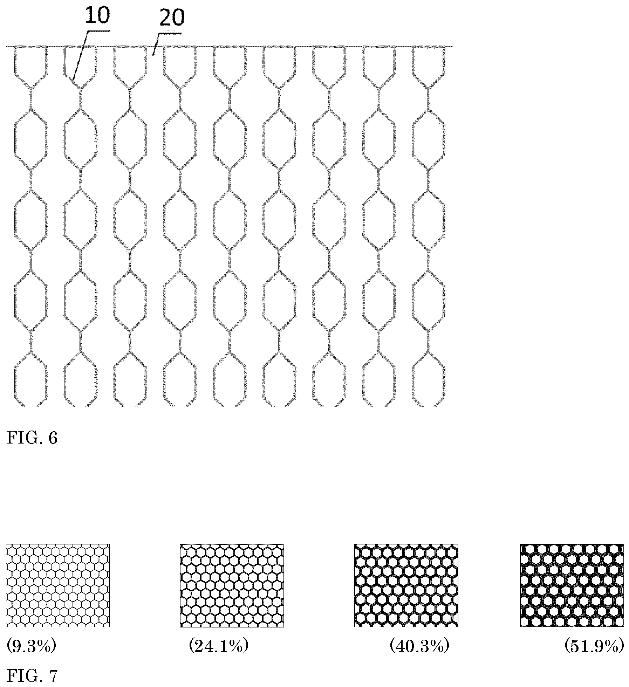

The bonding layer 6 and the injection-molding bonding layer 7 as well as the injection moldable bonding resin layer 8 are as described above. After adhering the specularly reflective layer to the injection moldable structure of the present invention or immediately after forming the specularly reflective layer, the present invention forms a patter on the specularly reflective layer by electromagnetic radiation, such that the specularly reflective layer has a removal layer 5-1 of the specularly reflective layer. FIGS. 4 to 6 are schematic diagrams for differently shaped patterns by electromagnetic radiation. Of these, FIG. 4 is a schematic diagram for a pattern of connected hexagons; FIG. 5 is a schematic dot diagram; FIG. 6 is a schematic diagram for unconnected hexagons. FIGS. 4 to 6 include the metal-removed portion 10 and the metal-unremoved portion 20. FIG. 7 is a schematic diagram for patterns corresponding to different removal areas.

The release layer may be flexibly set as appropriate. It may be release paper or a release PET film, which has anti-sticking characteristics. Release paper is made by laminating paper with polyethylene resin and then peeling either of the sides with silicone, etc.

The anti-counterfeit reflective sheet of the present invention has good RFID signal transmission and retroreflective properties. In some specific embodiments of the present invention, when a viewing angle is 0.2° and an incident angle is 5°, the anti-counterfeit reflective sheet has a coefficient of retroreflection of 45 or more for white color, and a coefficient of retroreflection of 30 or more for yellow color, which are in line with the ISO7591 standard or the standard of Retro-Reflective Sheetings for License Plates of Motor Vehicles (GA666 2018).

### <Preparation Method for Anti-Counterfeit Reflective Sheet>

The present invention further provides a method for preparing anti-counterfeit reflective sheets. In some specific embodiments of the present invention, a surface layer and a support layer are prepared on an engineering substrate, respectively; more specifically, a resin compounding solution for forming the surface layer may be prepared, and this resin compounding solution is coated on the engineering substrate film and dried to form the surface layer with a certain thickness; furthermore, a resin compounding solution for forming the support layer may be prepared, and this resin compounding solution is coated on the surface layer and dried to form the support layer with a certain thickness; afterwards, the glass beads are attached to the support layer, and a resin mixture is coated to form a focusing layer, on which a metal is vacuum deposited or sputtered to obtain the specularly reflective layer; thereafter, a pattern is formed by electromagnetic radiation, and the engineering substrate is peeled off to obtain the anti-counterfeit reflective sheet of the present invention. In some specific embodiments of the present invention, after obtaining the specularly reflective layer, it is adhered to the injection moldable structure; subsequently, a pattern is formed by electromagnetic radiation, and the engineering substrate is peeled off to obtain the anti-counterfeit reflective sheet. In other specific embodiments of the present invention, the anti-counterfeit reflective sheet of the present invention is obtained with the step of forming the specularly reflective layer and its previous steps as same as those in the preparation method of the above embodiment except for directly forming a pattern by electromagnetic radiation on the specularly reflective layer upon its formation, then adhering it to the injection moldable structure, and peeling off the engineering substrate.

### <Applications of Anti-Counterfeit Reflective Sheet>

The anti-counterfeit reflective sheets of the present invention can be used for preparing injection moldable sheets containing an RFID chip. In some specific embodiments of the present invention, the preparation method for this injection moldable sheet comprises: adhering the anti-counterfeit reflective sheet of the present invention to the mold wall of the injection mold, where more specifically, the reflective surface and the mold plate are on the same side, and the surface of the injection moldable structure and the injection port are on the same side; and injecting the injection moldable material for injection molding, where the injection temperature is 200°C to 250°C, the injection pressure is 6 k to 8 kPa; the plastic injection pressure is 100 to 150 bar at a speed of 85% to 95%, and the dwelling pressure is 70 to 95 bar at a speed of 30% to 50%. When designing a mold, there should be room preserved for RFID placement in the middle of the mold. After the anti-counterfeiting reflective film of the present invention and the injection moldable material are molded, the passive RFID chip is placed in the designed room. The RFID chip of the present invention may be commercially available. In the injection moldable sheets containing an RFID chip provided in the present invention, the anti-counterfeit reflective sheets and the injection moldable material are firmly bonded and are difficult to be uncovered or peeled off. Number plate characters or two-dimensional codes may also be inkjet printed on the anti-counterfeit reflective sheets as appropriate, and they have a good application prospect in the field of road traffic.

### Examples

The present invention will be further described below with reference to specific examples.

### Example 1

The transparent polyethylene terephthalate film with a thickness of 75 pm manufactured by TEIJIN LIMITED (trade name: Tetoron Film S-75, TEIJIN LIMITED) was used as an engineering substrate.

100 parts by weight of acrylic resin solution (trade name: RS-1200) manufactured by NIPPON CARBIDE INDUSTRIES (HANGZHOU) CO., LTD., 14 parts by weight of methylated melamine resin solution (trade name: NIKALAC MS-11, SANWA CHEMICAL CO., LTD.), 4 parts by weight of cellulose derivative (trade name: CAB, TOKUSHIKI Co., Ltd.), 1.5 parts by weight of ultraviolet absorber (trade name: Seesorb 103, SHIPRO KASEIKAISHA CO., LTD.), 0.05 parts by weight of levelling agent (trade name: BYK-300, BYK-Chemie Japan KK), 0.12 parts by weight of catalyst (trade name: BECKAMINE P-198, DIC Corporation), and 16.7 parts by weight of solvent (methyl isobutyl ketone (hereinafter referred to as MIBK)/toluene=8/2) were mixed while stirring to prepare a resin compounding solution for forming the surface layer. The resin compounding solution was coated on the engineering substrate and dried to form the surface layer with a thickness of about 36 pm.

100 parts by weight of acrylic resin (trade name: RS-3000, NIPPON CARBIDE INDUSTRIES (HANGZHOU) CO., LTD.), 13.6 parts by weight of isocyanate crosslinking agent (trade name: Sumijoule N-75, Sumika Bayer Urethane Co., Ltd.), and 20 parts by weight of toluene and 10 parts by weight of MIBK as solvents were mixed and stirred to prepare a resin compounding solution for forming the support layer. Afterwards, this resin compounding solution was coated on the surface layer, and then dried at 100°C for 5 min to form a support layer with a thickness of about 13 pm and a light transmittance of 10%, which was opposite to the focus-forming layer. The test methods for the thickness and transmittance of the support layer were as follows: the resin compounding solution for forming the support layer was coated on the transparent polyethylene terephthalate film with a thickness of 75 pm manufactured by TEIJIN LIMITED (trade name: Tetoron Film S-75, TEIJIN LIMITED) and dried, and then 75 pm was subtracted from the total thickness to produce the thickness of the support layer; the light transmittance was produced by measuring the support layer and the transparent polyethylene terephthalate film together and then multiplying the result by a coefficient of 0.93.

The glass microspheres (trade name: NB-23S, NIPPON CARBIDE INDUSTRIES (HANGZHOU) CO., LTD.) were attached to the above support layer, and heated at 145°C for 3.5 min, so that the glass microspheres were immersed in the support layer in such a way that the glass microspheres were exposed from the support layer, and about 75% of the diameter of the glass microspheres was maintained in the support layer.

100 parts by weight of acrylic resin solution (trade name: RS-5000, NIPPON CARBIDE INDUSTRIES (HANGZHOU) CO., LTD.), 5.5 parts by weight of methylated melamine resin solution (trade name: NIKALAC MS-11, SANWA CHEMICAL CO., LTD.) and 39.3 parts by weight of solvent (MIBK/toluene=4/6) were mixed and stirred to prepare a resin compounding solution for the focusing layer. This resin compounding solution was coated on the support layer and the glass microspheres and dried to form a focus-forming layer with the average thickness of about 23 pm.

Subsequently, the aluminum was vacuum deposited on the focusing layer to thereby obtain a specularly reflective layer. The thickness of aluminum deposited on the specularly reflective layer was 600 Å.

Next, radio wave radiation was utilized to form a pattern on the specularly reflective layer (designing a pattern of unconnected hexagons with a vector file on a computer, then setting the parameters such as the step (0.01 mm), the current (30%), and the frequency (50000 Hz) on the laser software, setting the laser head at the normal focus position, and subsequently outputting and printing the pattern), thereby obtaining the specularly reflective layer treated by the radio wave radiation, where the removed area was 30%.

100 parts by weight of acrylic adhesive resin was prepared into a resin compounding solution. This resin compounding solution was coated on a polyester film as an injection-molding bonding layer (model: HBL-002, Mitsubishi Chemical Corporation) and dried to form an injection moldable structure with a thickness of about 30 pm.

The injection moldable structure was adhered to the specularly reflective layer treated with radio wave radiation, and then the engineering substrate was peeled off to obtain the anti-counterfeit reflective sheet of the present invention.

### Example 2

The methods and steps were the same as those of Example 1 except that the injection-molding bonding layer was replaced from the polyester film to a polycarbonate film.

### Example 3

The methods and steps were the same as those of Example 1 except that the injection-molding bonding layer was replaced from the polyester film to an acrylate film (model: RS 1200, NIPPON CARBIDE INDUSTRIES (HANGZHOU) CO., LTD.).

### Example 4

The methods and steps were the same as those of Example 1 except that the injection-molding bonding layer was replaced from the polyester film to a PET film (model: FP602, Hefei Lucky Science Technology Industry Co., Ltd.).

### Example 5

All the methods were the same as those of Example 1 until the specularly reflective layer treated with radio wave radiation was obtained.

100 parts by weight of vinyl chloride-vinyl acetate (VCVA) resin having a solid content of 15% to 50%, a weight-average molecular weight of 20,000 to 70,000, and a gelation rate of 2% to 7% was directly coated in a coating manner on the above specularly reflective layer treated with radio wave radiation to form an adhesive layer with a thickness of about 20 pm. This adhesive layer was rewound directly from the back film to form a film without a need of the release film.

### Comparative Example 1

The difference from Example 1 was that the pattern was not radiated by radio wave.

### Comparative Example 2

The difference from Example 2 was that the pattern was not radiated by radio wave.

### Comparative Example 3

The difference from Example 3 was that the pattern was not radiated by radio wave.

### Comparative Example 4

The difference from Example 4 was that the pattern was not radiated by radio wave.

### Comparative Example 5

Comparative Example 5 was basically the same as Comparative Example 1 with the difference in that the thickness of the specularly reflective layer was 100 Å.

### Comparative Example 6

### (Glass beads-Enclosed Reflective Film)

All the methods were the same as those of Example 1 until the specularly reflective layer treated with radio wave radiation was obtained.

A solution of 100 parts by weight of butyl acrylate BA/acrylic acid AA (weight ratio: BA/AA=90/10) in an ethyl acetate copolymer (ethyl acetate/toluene=1/1), 0.5 parts by weight of isocyanate crosslinking agent (trade name: CoronateL, Nippon Polyurethane Industry Co., Ltd.), and 16.1 parts by weight of ethyl acetate as a solvent were mixed while stirring to prepare a resin compounding solution for forming the adhesive layer. This resin compounding solution was coated on a release film (trade name: E2P-H(P), LINTEC Corporation) and dried to form an adhesive layer (i.e. the bonding layer) with a thickness of about 41 pm.

Subsequently, after adhering the specularly reflective layer to the adhesive layer, the engineering substrate was peeled off to obtain a retroreflective sheet of Comparative Example 6 having an adhesive layer.

### Comparative Example 7

Polyethylene having a softening temperature of about 105°C was heated at 105°C and adhered to engineering paper to form a temporary support layer, on which a layer of glass beads having an average particle size of about 65 pm and a curvature of about 1.91 was arranged uniformly and tightly and pressurized by a roller, and 1/3 of the diameter of the glass microspheres was embedded in the resin.

Thereafter, aluminum was vacuum deposited on the side, from which the glass beads were exposed, of the temporary support layer to form a metal evaporated film with a thickness of about 0.1 pm on the glass beads. Next, a liquid silane coupling agent (manufactured by Toray - Dow Corning, trade name: SZ6030) having a viscosity of about 2 cP at 23°C was coated on the metal film-deposited side of this temporary support layer to form a coupling agent-containing film with a thickness of about 0.3 pm.

Subsequently, 100 parts by weight of acrylic resin solution (manufactured by Tokushiki Co., Ltd., trade name: ST-700) having a solid content of about 50 wt% and 14.2 parts by weight of HMDI (4,4'-methylenebis(cyclohexyl isocyanate)) bridging agent were compounded to form a resin solution. This resin compounding solution was coated on a peeling-treated transparent polyethylene terephthalate film with a thickness of 20 pm, and dried to remove the solvent to form a film with a thickness of about 30 pm. Afterwards, 167 parts by weight of acrylic resin solution (manufactured by NIPPON CARBIDE INDUSTRIES CO., INC., trade name: KP-1864A) having a solid content of about 30 wt% together with 125 parts by weight of acrylic resin solution (manufactured by NIPPON CARBIDE INDUSTRIES CO., INC., trade name: KP-1703A) having a solid content of about 40 wt%, 10 parts by weight of CAB (cellulose acetate butyrate), 50 parts by weight of titanium dioxide and 30 parts by weight of MIBK (methyl isobutyl ketone) were mixed and stirred to form a resin solution. This resin compounding solution was coated on the above 30 pm film and dried to remove the solvent to form a support layer film with a total thickness of about 110 pm.

This support layer film was adhered to the previously prepared coupling agent-containing film, where the glass beads on the temporary support layer had been metal deposited and coated with a liquid silane coupling agent. During adhering, they were heated at 70°C and pressurized at 900 kg/m, and 1/3 of the diameter of the glass beads was embedded in the support layer film.

500 m of the film laminated under pressure was coiled at a coiling tension of 40 kg/m with a paper tube having an inner diameter of about 75 mm and an outer diameter of about 95 mm, then left at room temperature for 20 hours, and rewound after the support layer film was completely bridged. The engineering paper with polyethylene on the temporary support layer was peeled off, and the glass beads were transferred to the support layer.

Subsequently, the support layer film with the glass beads and a non-elongated acrylic film with a thickness of 75 pm and a total light transmittance of about 93%, where the glass beads and the acrylic film were adhered oppositely, passed concurrently between a protruded mesh-like metal shaft with a wire diameter of about 0.3 mm and a surface temperature of about 190°C and a rubber shaft with a surface temperature of about 60°C, where the acrylic film side was in contact with and passed through the rubber shaft, and the peeling-treated transparent polyethylene terephthalate film side was pressurized by the protruded mesh-like metal shaft and deformed by hot melting.

The peeling-treated transparent polyethylene terephthalate film was peeled off from the resulting hot-melt deformation product. Thereafter, 100 parts by weight of adhesive (manufactured by NIPPON CARBIDE INDUSTRIES CO., INC., trade name: KP-997) was stirred and coated on a silicon-treated transparent polyethylene terephthalate release film with a thickness of about 75 pm, thereby forming a pressure-sensitive adhesive (i.e., the bonding layer) with a thickness of about 41 pm. The pressure-sensitive adhesive was then adhered to the support layer film to form a retroreflective sheet having a capsule-type structure.

### Comparative Example 8

By the method of cutting and machining the surface of a metal as a brass plate master mold from three directions with each of the intersection angles of 60.62° by two diamond turnings with the front angles of 68.53° and 71.52° to form cross-sectional V-shaped grooves, a plurality of epsilon-shaped (" 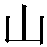 ") triangular pyramidal solid angles with the height of 100 pm were formed on the brass plate master mold.

A metal mold made of nickel steel was formed by the electroforming method on the surface of the master mold.

40 parts by weight of acrylic resin, thiodibenzenedithiol dimethacrylate, 58 parts by weight of 2,4-dibromophenyl acrylic acid, and 2 parts by weight of photocuring catalyst "Darocur 1173" were prepared into an acrylic UV curable resin solution with a refractive index n=1.63 for use in the surface protective layer and the retroreflecting element layer. Then the above resin was coated on the metal mold. Thereafter, a 50-pm acrylic resin film (manufactured by Kaneka Corporation, 014NST) was adhered as a surface protective layer to the UV curable resin. Subsequently, the surface of the acrylic resin film was irradiated with ultraviolet rays to cure the UV curable resin. Finally, the cured resin was peeled off from the metal mold.

The polyester fiber resin composition was coated on the surface of a smooth PET film with a thickness of 38 pm to form a support layer and a connecting bracket.

Next, the surface protective layer and the retroreflecting element layer as well as the support layer and the adhesive layer passed between an embossed mesh-like metal shaft with a line width of 0.3 mm and a surface temperature of 190°C and a rubber shaft, where the retroreflecting element passed through the rubber shaft by contact under pressure. A retroreflective sheet with a sealed structure was created by the hot melting method. The PET film was peeled off from the resulting deformation product. Thereafter, 100 parts by weight of adhesive (manufactured by NIPPON CARBIDE INDUSTRIES CO., INC., trade name: KP-997) was stirred and coated on a silicon-treated transparent polyethylene terephthalate release film with a thickness of about 75 pm, thereby forming a pressure-sensitive adhesive with a thickness of about 40 pm. The pressure-sensitive adhesive was then adhered to the support layer film to form a retroreflective sheet with a capsule microprism structure.

### Comparative Example 9

The RFID chip was directly disposed in a plastic part formed by injection molding.

### <Applications and Performance Tests>

The reflective sheets obtained in the Examples and Comparative Examples were placed successively on a plastic molding machine (manufactured by Powerjet Plastic Machinery Co., Ltd., Foshan City, trade name: BJ1380-S6) for injection molding tests. The test reflective sheet was attached to the mold plate opposite the injection port, where the reflective surface and the mold plate were on the same side, and the adhesive surface and the injection port were on the same side. The release paper or release film was removed by peeling. Afterwards, injection molding was carried out. The material for injection molding was selected from polycarbonates. The plastic molding machine was set such that the plastic injection pressure was at 120 bar and the speed was 92%; and the dwelling pressure was at 90 bar and the speed was 40%. When designing the mold, there should be room preserved for RFID placement in the middle of the mold. After molding, the passive RFID chip was placed in the designed room of the injection moldable sheet.

A bracket with a height of about 1.8 m was made with a three-legged support underneath, and a fixed position for placing the glass plate was created at the height of about 1.6 m of the bracket. Then the test injection moldable sheet with RFID was sticked on the glass plate with a double-sided adhesive tape, tested on an open road outdoors, and thereafter read and written with Wuxi Dahua C72 Handheld Reader (Chainway C72) to confirm the read-write distance. For example, the number "ENXIAI 123456" was set in the chip. If the signal was tested by the reader, the number "ENXIAI 123456" would be displayed on the reader. The test results of the signal receiving distances were shown in Table 1. The influences on the signal shielding (measured by a signal projector), the coefficient of retroreflection (tested in accordance with Item 6.5.1 of Retro-Reflective Sheetings for License Plates of Motor Vehicles (GA666 2018)), and the tightness to the injection plastics were shown in Table 2.

The tightness to the injection plastics was tested by the following method: The injection moldable sheet (containing an anti-counterfeiting reflective sheet and an injection plastic) was scraped with a knife to observe whether the anti-counterfeiting reflective sheet could be completely and continuously scraped off, or to observe whether the whole sheet could be completely and continuously peeled off by hand after scraping, or to confirm whether the whole film would be completely and continuously separated by impacting with a high-pressure water gun (7 kg) at an angle of 25° for consecutive 2 min after scraping.

**Table 1 Signal Receiving Distances in Different Examples and Comparative Examples**

| | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|---|---|---|
| Distance (m) | 4.2 | 4.2 | 4.2 | 4.2 | 4.2 | 0 | 0 | 0 | 0 | 0 | 4.2 | 4.2 | 4.2 | 4.2 |

**Table 2 Influences of Different Examples and Comparative Examples on Signal Shielding, Coefficient of Retroreflection and Tightness to Injection Plastic**

| | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|---|---|---|---|---|
| Signal Shielding | ○ | ○ | ○ | ○ | ○ | × | × | × | × | × | ○ | ○ | × | ○ |
| Coefficient of Retroreflection | ○ | ○ | ○ | ○ | ○ | ○ | ○ | ○ | ○ | × | ○ | × | × | None |
| Tightness to Injection Plastic | ○ | ○ | Δ | × | ○ | ○ | ○ | Δ | × | ○ | × | ○ | ○ | None |

| | | | | | | | | | | | | | | |
|---|---|---|---|---|---|---|---|---|---|---|---|---|---|---|
| Signal shielding: o means that the signal intensity is the same as that without an anti-counterfeit reflective sheet; Δ means that the signal intensity is 70% or more and less than 100%; × means that the signal intensity is 70% or less or the signal even cannot be detected. Coefficient of retroreflection: o means up to the ISO 7591 international standard for reflective films; × means not up to the ISO 7591 international standard for reflective films. Tightness to injection moldable material: o means firm bonding, i.e., the sheet cannot be uncovered and peeled off by hand or a high-pressure water gun in case of cutting with a knife; Δ means partial but discontinuous peeling; × means that the sheet can be peeled off by hand or directly opened by a high-pressure water gun. | | | | | | | | | | | | | | |

Of course, the present invention is not limited to the above embodiments. Under the teachings of the present invention, various variations of the above embodiments may occur to a person skilled in the art without departing from the scope of the present invention.

## Claims

1. An anti-counterfeit reflective sheet, wherein
the anti-counterfeit reflective sheet has a glass beads-enclosed structure, which comprises a specularly reflective layer, and part of metal is removed from the specularly reflective layer by electromagnetic radiation.

2. The anti-counterfeit reflective sheet according to claim 1, wherein
a ratio of the area of a metal-removed portion to the area of the specularly reflective layer is from 1% to 60%; further, the specularly reflective layer is formed of a metal, and preferably, the metal is one or more selected from aluminum, silver, chromium, nickel, magnesium, gold, and tin.

3. The anti-counterfeit reflective sheet according to claim 1 or 2, wherein
the anti-counterfeit reflective sheet further comprises an injection moldable structure.

4. The anti-counterfeit reflective sheet according to claim 3, wherein
the injection moldable structure comprises a bonding layer and an injection-molding bonding layer, and further, the anti-counterfeit reflective sheet comprises a surface layer, a support layer, glass beads, a focusing layer, the specularly reflective layer, the bonding layer, and the injection-molding bonding layer in this order.

5. The anti-counterfeit reflective sheet according to claim 4, wherein
the injection-molding bonding layer comprises one or more of a polycarbonate film, a polyacrylate film and/or a polyethylene terephthalate film.

6. The anti-counterfeit reflective sheet according to claim 3, wherein
the injection moldable structure is selected from injection moldable bonding resin layers, and further, the anti-counterfeit reflective sheet comprises a surface layer, a support layer, glass beads, a focusing layer, the specularly reflective layer, and the injection moldable bonding resin layer in this order.

7. The anti-counterfeit reflective sheet according to claim 6, wherein
a resin of the injection moldable bonding resin layer at least comprises at least one of a vinyl chloride-vinyl acetate copolymer, a vinyl chloride polymer and/or an ethylene-vinyl acetate copolymer.

8. The anti-counterfeit reflective sheet according to any one of claims 1 to 7, wherein
when a viewing angle is 0.2° and an incident angle is 5°, the anti-counterfeit reflective sheet has a coefficient of retroreflection of 45 or more for white color, and a coefficient of retroreflection of 30 or more for yellow color.

9. The anti-counterfeit reflective sheet according to any one of claims 1 to 8, wherein
the anti-counterfeit reflective sheet has RFID signal sensitivity of -17 dBm or less and a frequency of between 920 Hz and 925 Hz.

10. A method for preparing the anti-counterfeit reflective sheet according to any one of claims 1 to 9, wherein
the preparation method comprises the steps of:
1) preparing a surface layer and a support layer on an engineering substrate respectively, attaching glass beads to the support layer, forming a focusing layer by coating a resin mixture, and vacuum depositing or sputtering a metal on the focusing layer to obtain a specularly reflective layer;
2) forming a pattern on the specularly reflective layer by electromagnetic radiation; and
3) peeling off the engineering substrate to obtain the anti-counterfeit reflective sheet.
